Europäisches Patentamt

European Patent Office

Office européen des brevets

(11) Publication number: **0 081 468**
A2

# (12) EUROPEAN PATENT APPLICATION

(21) Application number: 82830290.1

(22) Date of filing: 29.11.82

(51) Int. Cl.³: **B 60 C 5/06**

(30) Priority: 01.12.81 IT 4980581

(43) Date of publication of application:
15.06.83 Bulletin 83/24

(84) Designated Contracting States:
DE FR GB IT

(71) Applicant: Marganelli, Enrico
Via Stefano Infessura, 14
I-00179 Roma(IT)

(72) Inventor: Marganelli, Enrico
Via Stefano Infessura, 14
I-00179 Roma(IT)

(74) Representative: Fontana, Sergio
c/o Studio Köhler Fontana Via G. Calderini, 19
I-00196 Roma(IT)

(54) Safety inner tube for motor vehicles.

(57) The safety inner tube for motor vehicles according to the invention consists of a circular rubber tube (CA) with its internal volume divided in at least two sections (1'...6'), independent from one another and mutually air tight. Subdivision is effected with at least one wall (2...6) running parallel to the lateral sides of the surface (1) of the outer covering of the inner tube (CA). Each individual section (1'...6') has its own tube (1"...6") for air input. The tube (1"...6") are paired and topped with a sleeve (8) which allows inflation in pairs or individually.

In correspondence with the union of the walls (2...6) with the surface (1) of the inner tube (CA) are swellings (12) to trap foreign bodies which have penetrated the tire (PN).

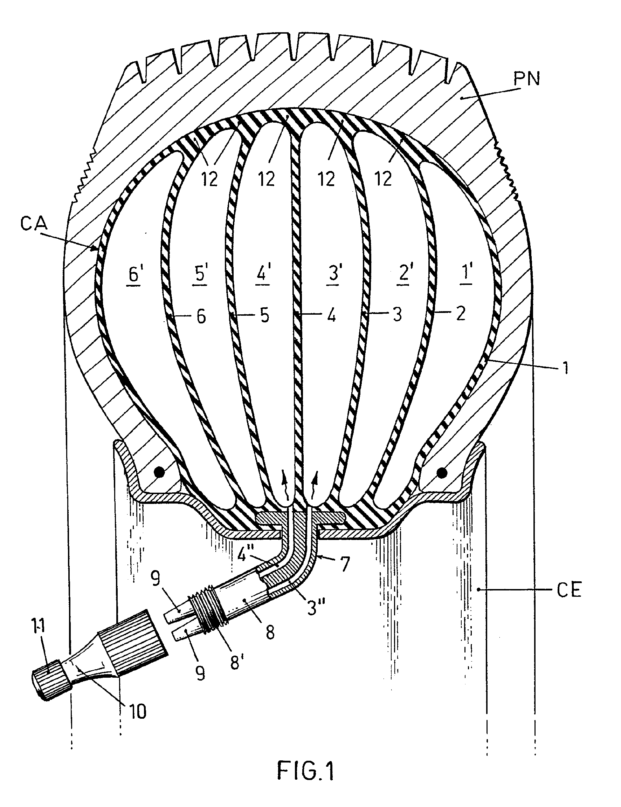

In case of a puncture, the tire air loss is limited, thus eliminating the need to abandon the vehicle and to immediately replace the tire (fig. 1).

FIG.1

- 2 -

**0081468**

Safety inner tube for motor vehicles

Enrico MARGANELLI, Via S. Infessura 14, 00179 Rome, Italy

This invention involves a safety inner tube for motor vehicles.

Inner tubes currently used for motor vehicles consist of a circular rubber tube with circular section, with air inlet through a single inflation vlave. The inner tube's structure itself leads to the inconvenience that all the air inside comes out in case of a puncture, with the result that the tire cannot be used if the inner tube is not replaced immediately. The immediate loss of all the air in the inner tube can be extremely dangerous if the puncture occurs at high speeds, even causing blow-out of the tire and, in any case, loss of control over the vehicle, which may go off the road and injure other parties. Moreover, puncture of a currently used inner tube always means that the wheel must be replaced, a particularly annoying operation particularly under adverse climactiv conditions. The economic damage must also be considered, due to the necessity of buying a new tire and a new inner tube, when they have been made unusable by running the vehicle on deflated tires.

Since the first inner tubes were developed (Dunlop, 1888), there have been no substantial modifications in their structure. However, some attempts have recently been made to

- 3 -

0081468

limit the negative effects of sudden air loss. For example, the Automobile Encyclopedia "Milleruote" (Vol. 3, p. 240, Editoriale Domus - Quattroruote, Milan, Italy, 1973) mentions 'inner tubes which eliminate or reduce the consequences of instantaneous deflation, due to the type of rubber used.' This means however that the type of rubber used can delay air loss, but not prevent the problem of gradual pressure reduction in the whole tire. As soon as the driver notices the reduced pressure, he himself must change the tire to prevent any damage to tire and inner tube caused by driving even a short distance to a repair shop.

Tires with no inner tubes have also been proposed - the so-called "tubeless" tires. These were not designed essentially to eliminate the need to abandon the vehicle in case of a puncture. In effect, for small punctures, loss of a considerable quantity of air occurs only after driving many kilometers or after several hours, if the vehicle is parked. Even in this case, however, the driver himself must change the tire as soon as he discovers the damage. However, if the puncture is more serious, the whole tire deflates, making the vehicle uncontrollable and requiring the tire to be changed. The tubeless tire also suffers from economic drawbacks. In fact, to eliminate the inner tube, the manufacturer has to cover the inner surface of the tire with a special layer of rubber. Therefore, replacing the tire involves the cost of a tire plus at least part of that of an inner tube. After very serious punctures, tubeless tires cannot be repaired. Thus even a still new tire in terms of wear may have to be replaced. Finally, tubeless tires require completely dent-free rims to prevent the tire from becoming detached, with even more serious consequences than a blow-out.

The aim of this invention is thus an inner tube which in case of puncture leads to none of the problems described above, thus eliminating any need for the driver to abandon the vehicle on the road or to change the tire himself, and allowing the vehicle to be driven even long distances before repair.

The invention achieves this goal with an inner tube consisting of a circular rubber tube with its internal volume divided in at least two sections, independent from one another and mutually air tight, where said subdivision is effected with at least one wall running parallel to the lateral sides of the surface of the outer covering of the inner tube.

The fundamental concept of the invention thus lies in dividing the internal volume of an inner tube into several sections, independent from one another and mutually airtight, so that a puncture involves only one part of the inner tube and leaves the rest completely unchanged.

It is clear how in this way, normal punctures do not lead to immediate loss of all the air in the inner tube, and

- 5 -

0081468

the pressure is maintained within limits which, depending on the number of punctures, allow the driver to continue unaware of any damage, or at least prevent the necessity of changing the tire.

According to the invention, each section in which the inner tube is divided is equipped with its own air inlet valve.

Always according to the invention, the air inlet valves of adjacent sections may be combined using a normal inflation sleeve to facilitate air input. Since their is a valve for each section, the driver who has noted a loss of pressure can restore the total pressure of the tire by using the individual sections unaffected by the puncture.

Finally, according to the invention the dividing walls are thickened at the junctures with the external surface of the inner tube. This thickening is designed to form a covering around any foreign bodies to protect adjacent sections from additional punctures by said body.

The advantages of the safety inner tube according to the invention thus seem to satisfy its aim. Subdivision of an inner tube into sub-tubes not only prevents an immediate loss of air from the whole tire, but also limits said loss to only part of it, preventing any need to abandon the vehicle. When pressure loss is noted, the desired pressure can be restored without changing the tire, and the journey can be continued for a long distance before repair is required.

This invention is described in detail below with reference to a preferred embodiment shown in the attached drawings in a purely exelplificative and non-limiting way.

Figure 1 shows a cross section of a tire with an inner tube according to the invention, equipped with air input valves for only the two central sections.

Figure 2 shows a cross section of part of a tire with an inner tube according to the invention, equipped with air input valves for only the two lateral sections.

Figure 3 shows a cross section similar to that in figure 2, with air input valves for the opposite lateral sections.

Figure 4 shows a top view of a wheel with three input valves according to the invention.

Figure 1 shows generically, with CA, the whole inner tube according to the invention subdivided in the embodiment illustrated into 6 sections, or sub-inner tubes, 1'...6', with five walls 2...6 arranged inside a tire PN mounted on wheel rim CE and with surface 1. Not show dividing walls 2...6 are parallel to one another and to the sides of surface 1. Two tubes 3", 4" run from the bottom of sections 3',4' enclosed in support sheath 7, topped by a sleeve 8 with two outlets 9, with threading 8', protruding from the rim like common inflating valves, for application of cap 10 for simultaneous inflation of said sections 3',4' and for screwing on of closing cap 11. Figure 1 also shows the reinforcing areas 12 in correspondence with the union of walls 2...6 with the surface 1 of the inner tube. These reinforcing areas are designed in case of puncture to trap the foreign body which penetrated surface 1 and to prevent it from causing another puncture in the adjacent dividing walls.

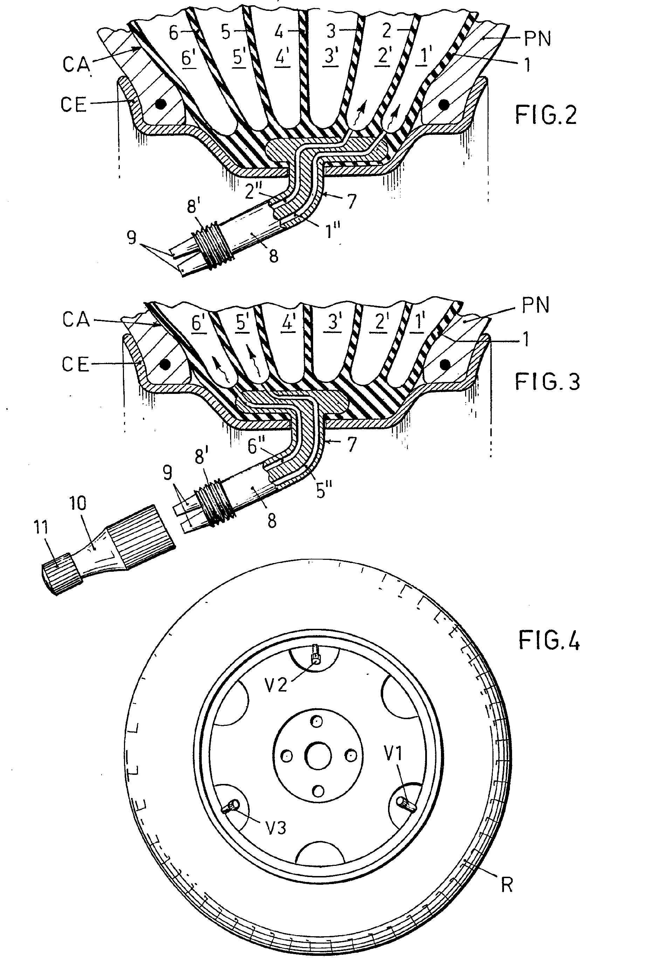

Figure 2 shows part of the same inner tube according to the invention, inside the same tire PN on the same wheel rim CE. Two tubes 1",2" run from the bottom of sections 1',2', which, in analogy with tubes 3",4" in figure 1, are enclosed in a support sheath 7 topped by a two outlet 9 sleeve 8, with threading 8', protruding from the rim like common inflating valves, for application of cap 10 for simultaneous inflation of said sections 1',2' and for screwing on of closing cap 11.

In analogy with figure 2, figure 3 shows the position of tubes 5",6".

Figure 4 shows a wheel R with an inner tube according to the invention. The three sleeves 8 are shown, each enclosing a pair of tubes 1",2"; 3",4"; 5",6", here shown with V1, V2, V3. Valves V1, V2, V3 are distributed on the wheel in equidistant positions, so as to leave the balancing unaffected.

0081468

Of course, the number of sections into which the inner tube is divided may be selected on the basis of the requirements of the tire surface. However, the principles remain according to which each section must be equipped with its own valve, independent of that for each other section, and the valves are always paired although they remain independent from one another.

Naturally, the principle of the invention may be applied to tires without inner tubes, the so-called 'tubeless' tires.

The above description shows clearly how the pressure of the whole tire is distributed uniformly in the sections comprising the inner tube according to this invention. In the embodiment illustrated, the total pressure, for example of 1.8 atm, will be subdivided on inflation into the three pairs of sections, each of which is inflated in a single operation. In inflating the first pair, the manometer reaches a value of 0.6 atm; inflating the second, it reaches 1.2 atm; inflating the third, it reaches 1.8 atm. In any case, individual checks may always be effected in succession, that is, section by section, using the individual outlets separately.

If only one section is punctured, experiments have shown that the pressure in a tire of the type illustrated drops 15%. This is almost impossible for the non-expert driver to detect. Once the problem has been perceived, the dri-

ver does not have to change the tire immediately. He may continue, although cautiously, restoring the total tire pressure at the first service station, relying on the integrity of the unpunctured sections. He may have the inner tube repaired at his convenience. Even if several sections are punctured, the air not only never escapes instantaneously from the whole inner tube, but the latter always at least maintains sufficient pressure to reach a service station to restore the total pressure, without changing tires, and/or to reach a garage to repair the inner tube.

The object according to the invention has been described and illustrated with reference to a preferred embodiment. Naturally, variations in proportions, size, and arrangement are possible without going beyond the bounds of the invention.

Claims:

1.   Safety inner tube for motor vehicles, comprising a circular rubber tube (CA) with its internal volume divided in
at least two sections of internal inner tubes (1'...6')
independent fron one another and mutally air tight, where
said subdivision is effected with at least one wall (2,...6)
running parallel to the lateral sides of the surface (1)
of the outer covering of the inner tube (CA).

2.   Safety inner tube as claimed in claim 1, wherein each
section (1'...6') into which the inner tube (CA) is divided by the walls (2...6) is equipped with its own tube
(1"...6") for air input, independent of the tubes for the
other sections.

3.   Safety inner tube as claimed in claim 2, wherein the
tubes (1"...6") from the various sections (1'...6') are enclosed by pairs in sheaths (7) topped by a sleeve (8) pro-
truding from the rin (CE) and equipped with threading (8')
for application of a cap (10) for simultaneous air input
in the respective pair of sections.

4.   Safety inner tube as claimed in claims 2 and 3, wherein
the sleeves (8) which top the tubes (1"...6") enclosed in
sheaths (7) are at the same non-return valves distributed
equidistant from one another on the rim (CE) of the wheel
(R) to maintain balancing.

0081468

5. Safety inner tube as claimed in claim 1, wherein the walls (2...6) show swellings (12) in correspondence with the areas where they are joined to the surface (1) of the inner tube (CA).

FIG.1

2 / 2

0081468

FIG.2

FIG.3

FIG.4